# EUROPEAN PATENT APPLICATION

(11) **EP 0 729 856 A1**
(43) Date of publication of application: **04.09.1996**
(21) Application number: 96301288.5
(22) Date of filing: 27.02.1996
(51) Int. Cl.: B60J 5/14, B60J 5/12, E06B 9/72

(54) **Shutters and motor drives therefor**

(30) Priority: 01.03.1995 GB 9504135
(71) Applicant: POWERPLUS SYSTEMS LTD., Reading, Berkshire RG7 2HW (GB)
(72) Inventor: Stephens, Paul, Reading, Berkshire RG7 3HW (GB)
(74) Representative: Wolff, Francis Paul

(57) **Abstract**

A dry freight shutter (92) is carried in a rising track (88) between a doorway, which the shutter is adapted to open and close, and a storage position for the shutter above the doorway when the doorway is open. The shutter is powered by a tube motor (11) located adjacent the pathway at a position intermediate the open and closed positions of the shutter. A torsion spring is inside the tube to store gravitational energy on lowering the shutter and to use the stored energy to assist the raising of the shutter. Cables (100,102) between the tube motor and the shutter draw the shutter open or closed and a cable tensioner accommodates differences between the relative velocities of different attachment points of the cable on the shutter as the shutter moves along the track.

## Description

This invention relates to shutters and to motor drives for shutters. The invention is applicable to shutters for goods vehicle loading and unloading doors in particular, but may also be used in many other applications, such as for doorways in buildings.

Taking a goods vehicle as an example, such as a van with rear loading doors, two kinds of vertically rising shutter that are commonly used are roller shutters and dry freight shutters. Both kinds consist of a plurality of parallel slats hingedly connected edge to edge.

In the case of roller shutters, the slats are narrow, and the top slat is connected to a roller above the vehicle doorway. The roller is turned to wind the shutter around it, raising the shutter and opening the loading door.

In the case of dry freight shutters, the slats are broader and so cannot conveniently be wrapped around a roller. In this case, the doorway side channels which contain guide wheels at the slat ends are curved forwardly at the top of the doorway and extend horizontally beneath the roof of the vehicle, so that when the shutter is raised it is accommodated over the freight bay.

Numerous proposals have been made to provide motor drives, whether for raising the shutter only, or for both raising and lowering the shutter, and such proposals need to address a variety of considerations, including minimising costs, ensuring reliability, minimising the space occupied by the drive mechanism, and avoiding unnecessary increases in weight.

Previous proposals have included the use of air cylinders, which in the simple case require a long stroke to raise the shutter, the use of shorter stroke air cylinders in combination with pulley systems to increase the velocity ratio, and the use of chain drive mechanisms.

The present invention aims to provide a motor suitable for use in powering shutters, a motor drive system for shutters using this motor, and a powered shutter using this drive system, which address the foregoing considerations.

The present invention concerns aspects of the motor, motor drive system and powered shutter described below, and the scope of the invention extends to all novel aspects of the motor, motor drive system and powered shutter whether individually or in combination with other features as described herein.

More specifically, in one aspect of the invention a motor may comprise a tube rotatably mounted on axial spindle means, drive means inside the tube for rotating the tube with respect to the spindle means, and torsion spring means, preferably inside the tube, acting between the tube and the spindle means.

In a further aspect of the invention, a motor drive system for a shutter may comprise a motor in accordance with the invention and include a mount for securing the motor by the spindle means, and anchor means on the tube for a driving connection to a shutter.

In a further aspect of the invention, a powered shutter may comprise a motor drive system in accordance with the invention, a shutter, and means for drivingly connecting the shutter to the anchor means on the tube of the motor. The connecting means may be a direct link between the shutter and the anchor means, as for example in the case of a roller shutter to be wound around the tube, or may be a remote link between the shutter and the anchor means, as for example elongate flexible means such as cables for attachment to the leading and trailing ends of a dry freight shutter, for drawing it in either direction along its track.

Further aspects of the invention are set out in the appended claims.

Embodiments of the invention are illustrated, by way of example, in the accompanying diagrammatic drawings, in which:
Figure 1 illustrates a tube motor in accordance with the invention, the tube itself being shown in section;
Figure 2 is a part sectional detail of Figure 1;
Figure 3 is a partial cut away isometric view further illustrating the detail shown in Figure 2;
Figure 4 is a side elevation of a dry freight shutter at the rear loading doorway of a panel van, the shutter being closed;
Figure 5 is a partial isometric exploded diagrammatic illustration of the shutter of Figure 4 in the same closed position;
Figure 6 is a view corresponding to Figure 4 with the dry freight shutter in the fully open position;
Figure 7 corresponds to Figure 5, with the shutter open as in Figure 6;
Figure 8 is an elevation of an actual dry freight shutter, closed, at the rear of a panel van (part cut away);
Figure 9 is a side elevation of the shutter of Figure 8, shown with the side of the van removed;
Figure 10 is an elevation of the shutter of Figure 8 from the interior of the van;
Figure 11 is a side elevation of another embodiment of a dry freight shutter in a view corresponding to Figure 4;
Figure 12 is an isometric view of a further embodiment of the invention, showing a tube motor fitted with a roller shutter;
Figure 13 is a detail of the remote end of the roller shutter; and
Figure 14 is a corresponding detail with the lath end stays removed.

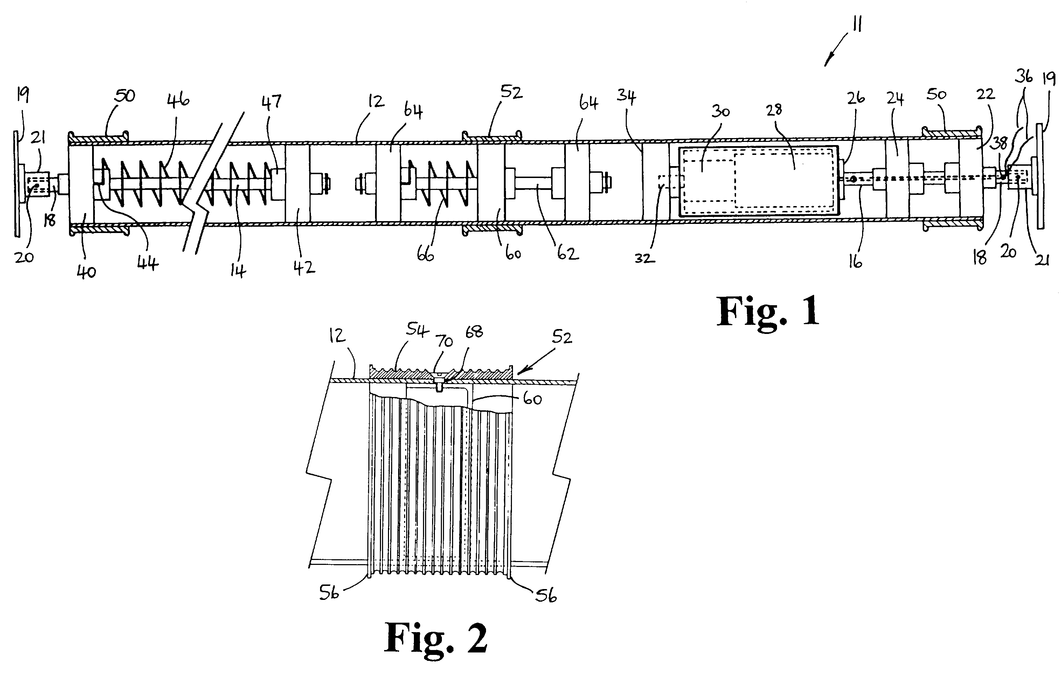

The motor details are shown in Figure 1. A tube motor 11 includes a straight cylindrical aluminium housing tube 12, which might normally have a length to diameter ratio of the order 20:1, but which is shown much shorter in the drawing for convenience. The tube is rotatably mounted on an axial spring spindle 14, projecting from one end of the tube, and a hollow axial motor spindle 16, projecting from the other end of the tube. Each spindle terminates outside the tube in a flattened end portion 18, which is received and restrained from rotation in a corresponding recess 21 or slot (not shown) in respective mounts 19 which are fixed in position, for example inside a panel van above and on either side of a freight doorway. The flats 18 are provided with apertures 20 through which they can be secured in position in the recesses, for example by split pins (not shown).

The motor spindle 16 is supported axially within the tube by two bearing discs 22, 24, of moulded plastics or cast aluminium, which are riveted to the tube through integral flanges around their respective circumferences and rotate over the motor spindle which passes through the centre of each disc. The inner end of the motor spindle terminates in a motor mounting plate 26 which carries a low voltage (12 or 24 volt) DC electric drive motor 28 with close coupled gearbox 30. Gearbox output shaft 32 is received in a cast aluminium tube drive disc 34, which is clamped to the gearbox shaft by a set screw, and riveted or otherwise fastened to the tube at its circumference.

An electric motor power cable 36 is taken from outside the tube through the hollow motor spindle 16, by means of inclined radial apertures 38 drilled therein, to the electric drive motor, which can thereby be energised to turn the tube drive disc 34, through gearbox 30, in either direction, while the motor and the spindle on which it is mounted remain stationary.

At the other end of tube 11, spring spindle 14 is provided with outer and inner moulded plastics bearing discs 40, 42, which are substantially identical to discs 22 and 24. However, the outer disc 40 includes an anchorage 44 for helical torsion spring 46, which is coiled around the spring spindle 14, and whose other end is fastened to the inner end of the spring spindle at 47. Outer disc 40 is fixed to the interior of the tube and turns freely over the spindle, whereas inner disc 42 is fixed to the spindle and slips under the tube. Rotation of the tube 11 over the fixed spindles therefore either winds up or unwinds the torsion spring, according to the direction of rotation.

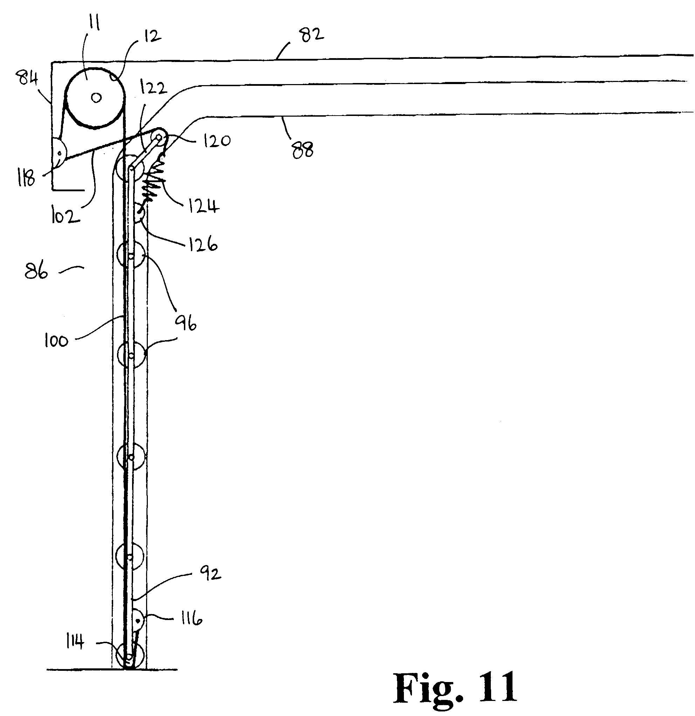

In order to allow it to be used for raising and lowering a dry freight shutter, tube 12 is, in one embodiment (used in Figure 11), fitted with three cable anchorages in the form of keyhole slots. Each slot is to receive one end of each of three cables and hold the terminal ferrule while the respective cable is wound around the tube.

In the alternative embodiment illustrated, tube 12 is provided with two cable winding sleeves 50 at each end and a third cable winding sleeve 52 at its mid-length. Sleeve 52 is shown in greater detail in Figure 2. Each sleeve has a continuous helical groove 54 over its outer surface, between opposite end flanges 56, for the orderly winding of a cable on to the sleeve. One end of each cable is anchored in a keyhole slot in the corresponding sleeve at the inner end of the groove 54. The sleeve grooves are of equal helical diameters around the tube so that one turn of any sleeve winds an equal length of cable on or off the tube.

The end sleeves 50 are fastened to the tube 12 so that they always turn solidly with the tube. Centre sleeve 52 is however capable of limited rotary movement over the tube, to allow cable tension to be maintained, as will be explained.

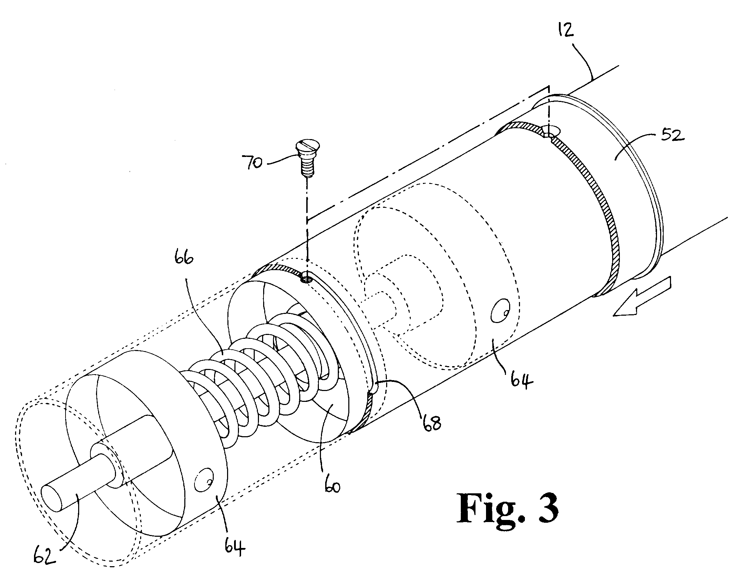

As shown in Figures 1 to 3, the central section of tube 12 contains a spring anchorage for sleeve 52. The anchorage comprises a flanged disc 60 mounted on an axial rod 62 that is supported at each end in flanged discs 64, the flanges of which are riveted to the tube so that they are solid with the tube. A helical torsion spring 66 is carried over rod 62 between one disc 64 and the centre disc 60. The ends of the spring are fixed one to each disc.

A slot 68 through the wall of tube 12 at its mid-point extends over about 100° of the circumference of the tube, corresponding to a slot length of about 15cm. Centre sleeve 52 is screwed to the flange of centre disc 60 by means of a countersunk shoulder bolt 70. The shoulder of the bolt lies in slot 68 and prevents the tube wall from being clamped between the sleeve and the disc 60, ensuring that the sleeve can turn over the tube within the limits imposed by the length of the slot. The arrangement is such that the torsion spring 66 normally urges the bolt against one end of the slot, but that sufficient tension in a cable wound around the sleeve will turn the sleeve over the tube against the spring tension and release an additional 15cm of cable.

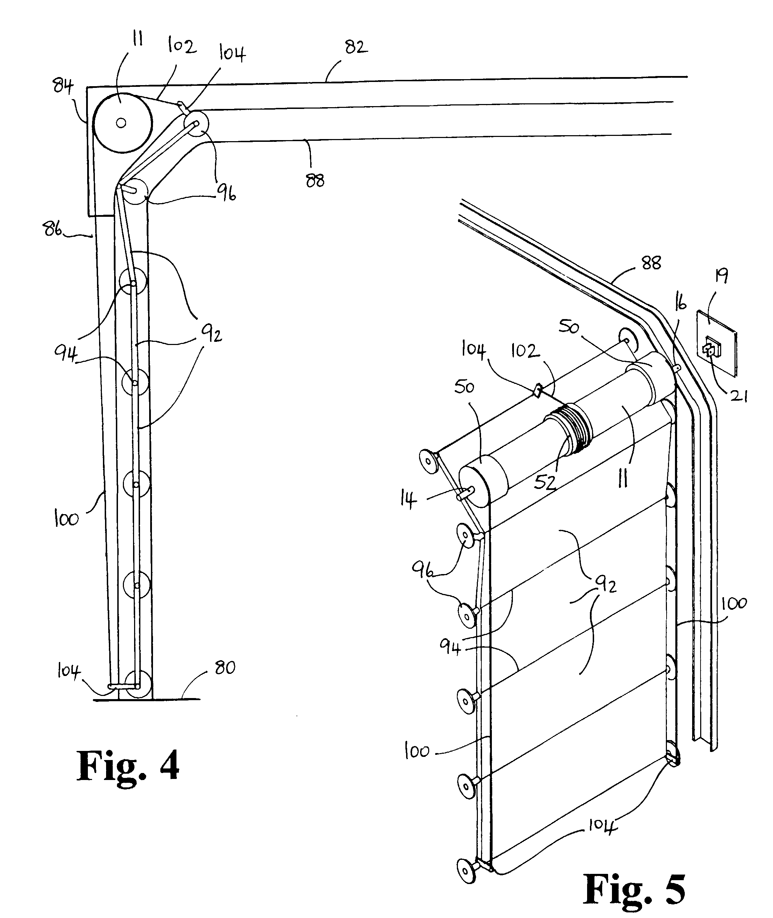

Figures 4 to 7 show the operation of a dry freight shutter at the rear loading doorway of a panel van. The drawings are diagrammatic and not to scale. The fixed parts of the van that are shown are the floor 80 of its freight bay, the roof 82, a rear top panel 84 across the top of the doorway 86 and the two opposite guideway channels 88 for the shutter 90.

The shutter consists ofa plurality of parallel slats or boards 92 extending across the doorway in side by side relationship and connected by hinge links 94 at their adjacent edges. Each slat is provided at each end with a guide wheel 96 located and retained in the corresponding guideway channel 88, so that when the shutter is raised, it follows a track defined between the parallel channels 88, forwardly at the top of the doorway 86 and into the roof space horizontally below the roof. As so far described, and apart from the tube motor 11, the shutter arrangement is generally conventional.

In accordance with the invention, the drive motor 11 extends across the top of the rear of the van in the angle of the roof 82 and top panel 84 and outside the curved guideway channels 88.

The torsion spring 46 in tube motor 11 is pre-tensioned before assembly into the van, and pins can be provided to lock the tube with respect to the spindles until the whole shutter has been assembled with its motor and cables in the van. The degree of pre-tension can be selected at will, but may for example be sufficient to reduce the apparent weight of the shutter by about 90% in the closed position. For example, a shutter that requires a force of 100 Kg to raise it from fully closed may only require 10 Kg force. The arrangement is desirably such that the apparent weight of the shutter is substantially constant, so that as it is lifted and its actual hanging weight decreases, the torsion spring tension is progressively reduced. Conversely, when the shutter is lowered from a fully open position in the roof of the van, with no hanging weight to begin with, the torsion spring is progressively tensioned and gradually takes up the increasing weight of the closing shutter.

In this way, by storing in the torsion spring 46 the gravitational energy released by lowering the shutter from roof level, and re-using the stored energy to assist in subsequently raising the shutter, the power requirement of the electric motor 28 is considerably reduced, which in turn permits the motor to be run from the vehicle batteries and reduces the generation of heat. This allows the shutter to be more or less continuously driven, and the potential cooling problems associated with a motor located inside a long tube are mitigated, because there is less heat to be dissipated.

By means of the cable winding sleeves 50 and 52, two lifting cables 100, one at each end of the tube, and one lowering cable 102 at the mid-point of the tube, each have one end attached to the tube. Their other ends are connected to fixings 104 on the shutter 90 for lifting and lowering it respectively.

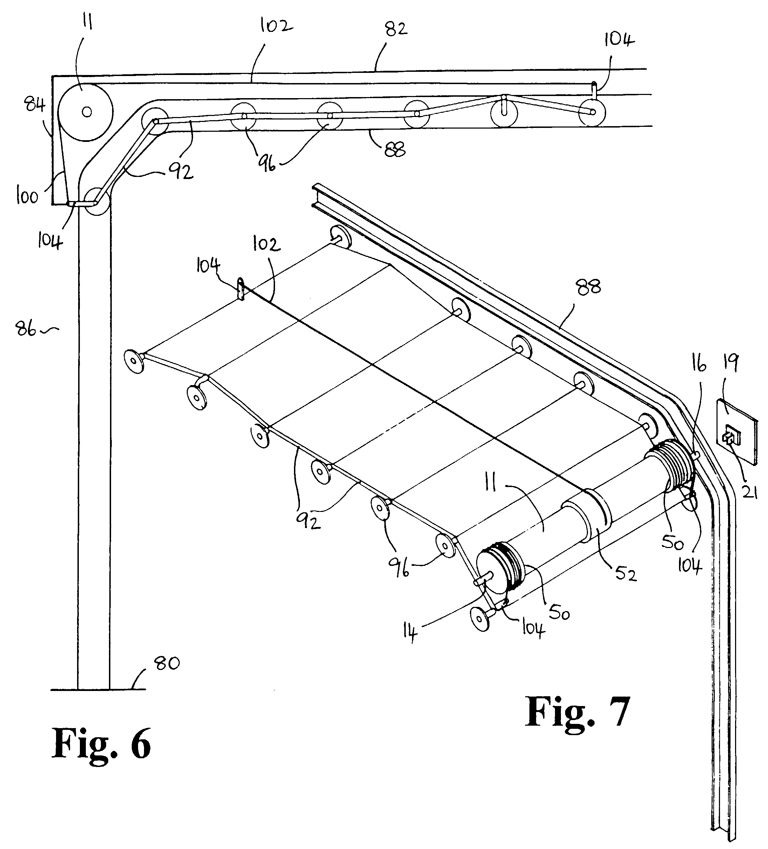

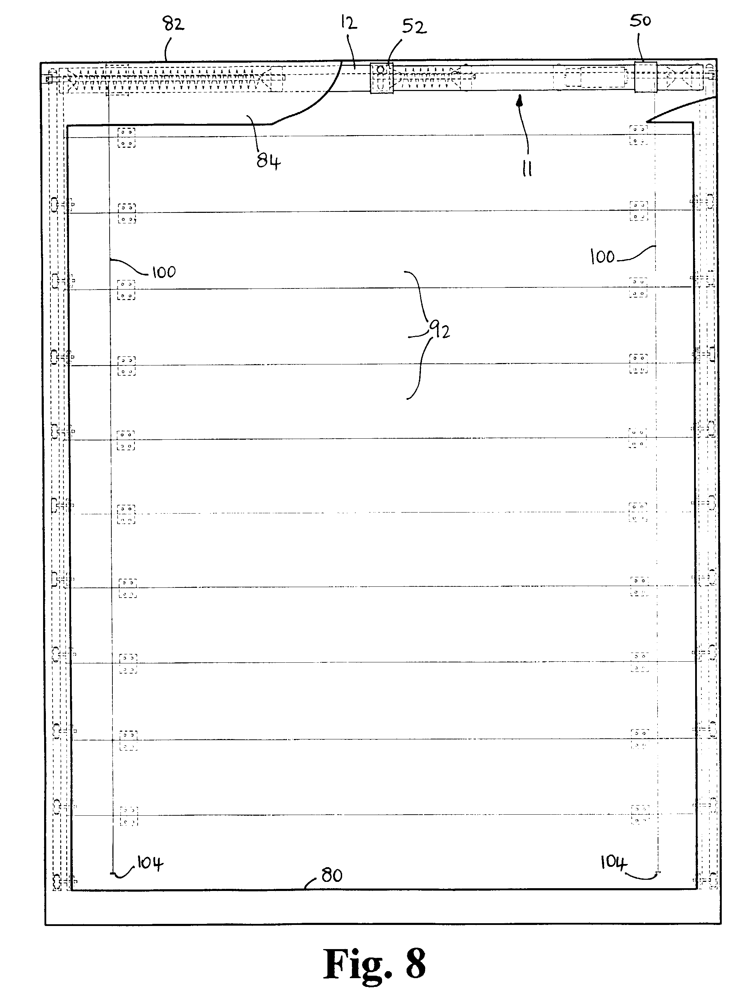

The lifting cables 100 are wound on the sleeves 50 in the opposite sense to the winding of the lowering cable 102 on the sleeve 52. As the tube turns, from the position shown in Figures 4 and 5, to raise the shutter, the lifting cables are wound on to sleeves 50 and the lowering cable is wound off sleeve 52. The reverse occurs as the shutter is lowered from the raised position shown in Figures 6 and 7.

Since the track formed by the opposed guide channels 88 is not straight, and the tube motor 11 is offset from the track, the lifting cables are not always paid out or wound in at the same speed as the lowering cable is wound in or paid out, when the shutter moves along its track. In fact, the aggregate paid out length of lifting cable and lowering cable is a minimum when the shutter is at about the mid-point of its travel. The tensioned sleeve 52 is arranged to be unextended against its spring at this position of the shutter. Then, whichever way the shutter is moved, the aggregate cable length can increase by up to 15cm as the cable on the centre sleeve is drawn off the sleeve faster, or wound up on to the sleeve slower, than the tube itself turns. Acceptable tension is maintained in the cable system by the torsion spring 66.

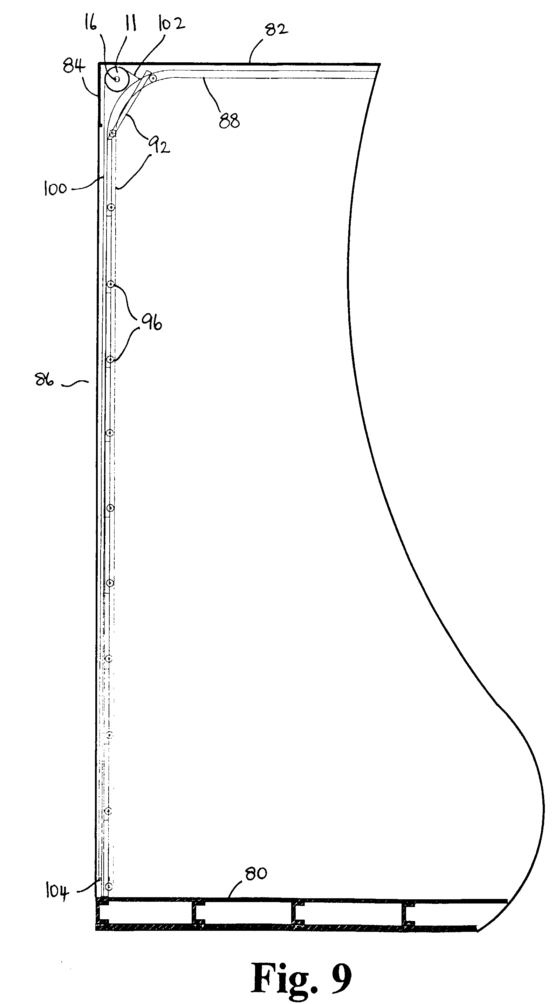

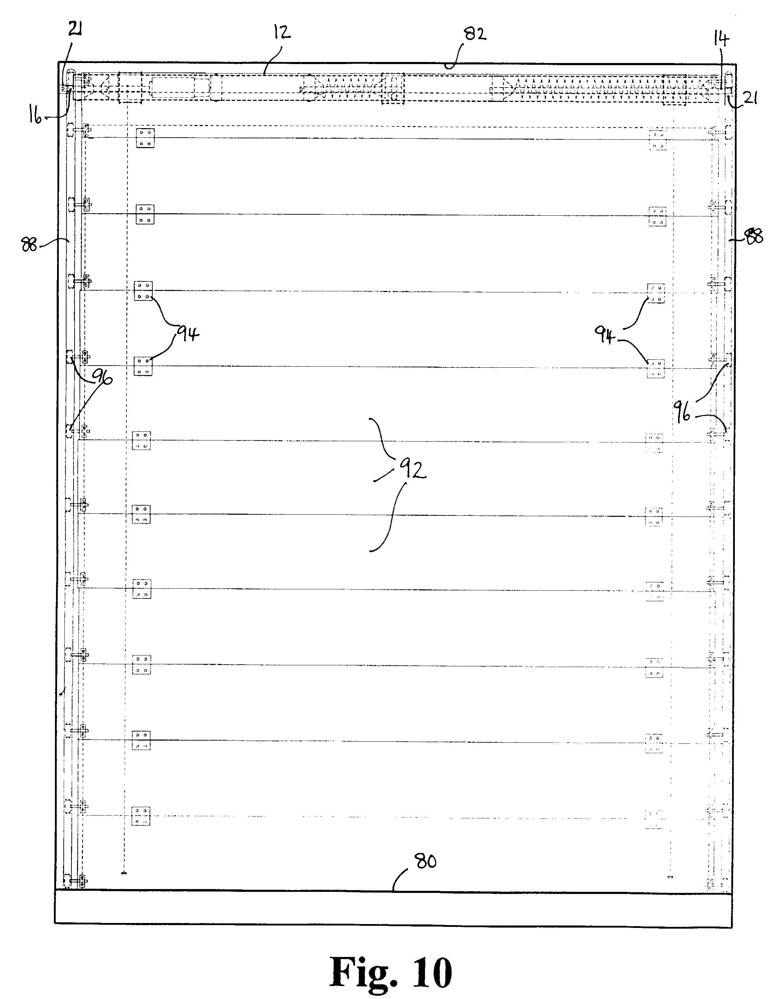

Figures 8 to 10 illustrate a practical embodiment of the invention, substantially to scale. Reference numerals are in accordance with those used in the previous Figures.

Figure 11 shows the same principles used in a different arrangement. Cable winding sleeves 50 and 52 are not used, and the cables are anchored directly to the tube 12 of tube motor 11. From the viewpoint used in Figure 11, the lifting cables 100 encircle the tube 12 in a clockwise direction from their respective cable end anchorages and then, when the shutter is closed, extend downwardly outside the shutter at the lateral edges thereof, optionally concealed behind the usual van doorway side panels, around the lower edge of the lowest slat 92, where a cable guide 114 is provided, and terminate at fastening bracket 116 on the inner face of the lower slat. In contrast, the lowering cable 102 is wound anti-clockwise around tube 12 from its keyhole anchorage (which accordingly faces the other way, on the tube circumference, from the lifting cable anchorages), and is then led down inside the top panel 84 to pulley 118 from which it leads upwards, in all positions of the shutter 90, to guide pulley 120 mounted on inwardly cranked arm 122 on the top edge of the top slat of the shutter. From pulley 120 the lowering cable 102 turns downwardly to a tension spring 124, which is fastened to bracket 126 on the inner face of the top slat of the shutter.

It can be seen from the drawings that rotation of the tube motor 11 in a clockwise direction will tend to close the shutter, while its rotation in an anti-clockwise direction will tend to open the shutter. The tension spring 124 corresponds to torsion spring 66 in the previously described embodiments and is likewise provided to ensure that the respective cables remain taut notwithstanding the geometry of guideway channels 88. However, the shutter may be operated without the tension spring, if the geometry of the guideway channels and the cable end brackets 116 and 126 permit, and there is a modicum of slack in the cables.

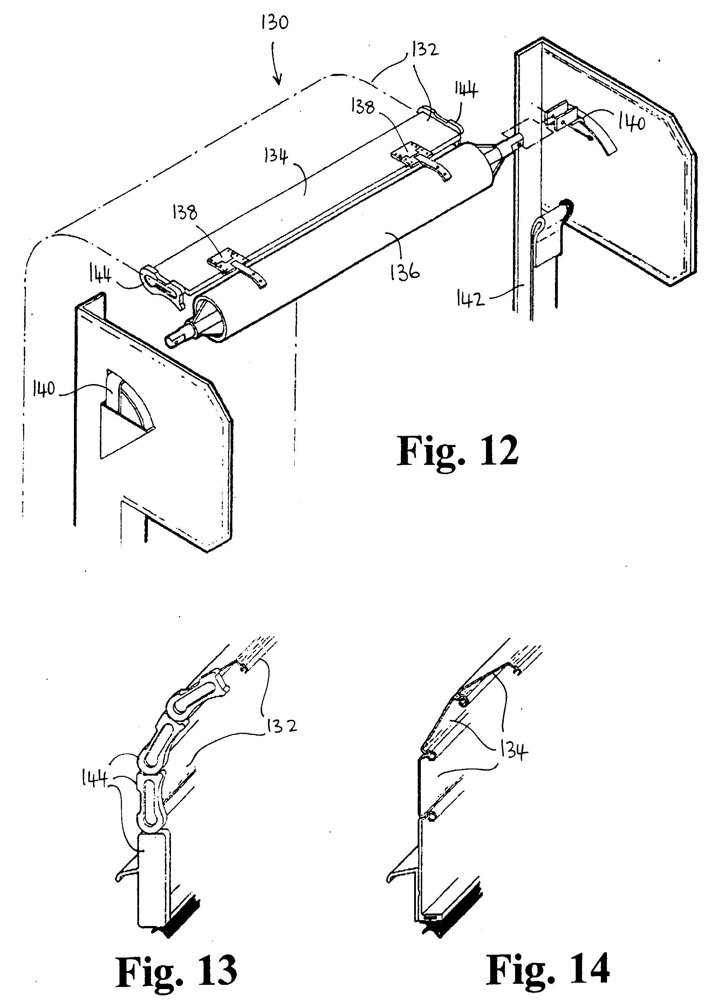

Figure 12 illustrates a variation in which a roller shutter 130, made up of interlinked narrow laths 132, is wound about a tube motor 136, the leading lath 134 at the top end of the shutter being permanently fastened by hingers 138 to the tube.

The tube motor 136 is essentially similar to the motor 11 illustrated in Figure 1, with no cable winding sleeves. The only substantial difference is in the mounting of the motor, which is in the usual arrangement used for roller shutters, that is to say on a pair of swinging arms 140 above the doorway so that the hanging portion of the shutter remains in the same plane, defined by guide channels 142, but as the shutter is wound on to or wound from the tube and the effective diameter of the rolled shutter increases or decreases accordingly, the location of the tube axis moves forward or backward as required. A proper choice of the location of the pivot points for the swinging arms will ensure that the weight of the shutter with its motor is sufficient to keep the shutter in the correct position.

Figure 14 illustrates the interlinking of the extruded aluminium laths 134, and Figure 13 shows the self-lubricating plastics end stays 144 that are riveted to the laths and serve as runners to guide the shutter in channels 142.

In all embodiments of the invention, suitable control means can be provided for the motor, for example using press buttons to raise, lower or stop the shutter, and limit switches to stop its movement at the end of each run. An emergency open switch can be provided inside the freight bay of the vehicle. A latch for holding the shutter closed can be opened by a solenoid on initiating an opening movement. The electric motor is suitably a relatively low voltage DC motor, and can be driven from the vehicle batteries, with provision for an alternative auxiliary power input.

## Claims

1. A motor comprising a tube rotatably mounted on axial spindle means, and drive means inside the tube for rotating the tube with respect to the spindle means; characterised in that the tube and the spindle means are also connected by torsion spring means adapted to store energy from the drive means when the tube is rotated in one sense relative to the spindle means, and to release the stored energy back to the tube when the tube is rotated in the opposite sense relative to the spindle means.

2. A motor according to claim 1, further characterised in that the torsion spring means comprises a spring coiled around the spindle means inside the tube, one end of the spring being attached to the spindle means, and an opposite end of the spring being attached to an anchorage fixed to the interior of the tube.

3. A motor according to claim 1 or claim 2, further characterised in that the drive means comprises an electric motor mounted fixedly on spindle means inside the tube, powered by low voltage electric current supplied through the interior of the spindle means on which it is mounted, and is adapted to rotate a drive disc fixed to the interior of the tube.

4. A motor drive system for a shutter comprising a motor according to any one of the preceding claims and further characterised by a mount for securing the motor by the spindle means, and anchor means on the tube for a driving connection to a shutter.

5. A powered shutter comprising a motor drive system in accordance with claim 4, a shutter, and means for drivingly connecting the shutter to the anchor means on the tube of the motor.

6. A powered shutter according to claim 5, further characterised in that the shutter is a roller shutter adapted to be wound around the tube by rotation of the tube in one sense relative to the spindle means, and to be unwound from the tube upon rotation of the tube in the opposite sense relative to the spindle means; and the means for drivingly connecting the shutter is a direct attachment of the shutter to the anchor means on the tube.

7. A powered shutter according to claim 5, further characterised in that the connecting means comprise elongate flexible means connecting the shutter and the anchor means, adapted to be wound around the tube when it is rotated in one sense relative to the spindle means, and to be unwound from the tube when it is rotated in the opposite sense relative to the spindle means.

8. A powered shutter according to claim 7, further characterised in that the elongate flexible means are attached to the leading and trailing ends of a shutter, for drawing it in either direction along a guide track.

9. A powered shutter according to claim 8, further characterised in that the elongate flexible means are connected to tensioning means adapted to accommodate variations in the relative rates of extension and retraction of elongate flexible means connected respectively to the leading and trailing ends of the shutter as it moves along the guide track.

10. A powered shutter according to any one of claims 7 to 9, further characterised in that the anchor means on the tube comprise a sleeve over the tube, one end of the elongate flexible means being anchored to the sleeve, and the sleeve being rotatable over the tube but connected thereto by torsion spring means acting as tensioning means for the elongate flexible means.

11. A powered shutter according to claim 10, further characterised in that the torsion spring is inside the tube and the sleeve is connected thereto by a circumferentially extending slot in the tube which serves to limit the rotation of the sleeve relative to the tube.

12. A dry freight shutter carried in a rising track between a doorway, which the shutter is adapted to open and close, and a storage position for the shutter above the doorway when the doorway is open, the shutter being powered by a tube motor located adjacent the pathway at a position intermediate the open and closed positions of the shutter, with torsion spring means associated with the tube adapted to store gravitational energy on lowering the shutter, and adapted to use the stored energy to assist the raising of the shutter, and including cables between the tube motor and the shutter for drawing the shutter open or closed, and a cable tensioner to accommodate differences between the relative velocities of different attachment points of the cable on the shutter as the shutter moves along the track.
